# EUROPEAN PATENT SPECIFICATION

(11) **EP 1 663 816 B1**
(45) Date of publication and mention of the grant of the patent: **31.03.2010**
(21) Application number: 04783181.3
(22) Date of filing: 07.09.2004
(51) Int. Cl.: B65D 90/04

(54) **BULK MATERIAL CARGO CONTAINER LINER WITH INTERNAL RESTRAINT SYSTEM FOR PREVENTING THE OUTWARD BULGING OF THE LINER**
SCHÜTTGUTFRACHTBEHÄLTERAUSKLEIDUNG MIT INNEREM RÜCKHALTESYSTEM ZUR VERHINDERUNG DES NACHAUSSENWÖLBENS DER AUSKLEIDUNG
POCHE INTERNE DE CONTENEUR POUR MATERIAU EN VRAC AVEC SYSTEME DE CONTRAINTE POUR DIMINUER LA DEFORMATION VERS L'EXTERIEUR DE LA POCHE

(30) Priority: 04.09.2003 US 654067
(43) Date of publication of application: 07.06.2006
(73) Proprietor: ILLINOIS TOOL WORKS INC., Glenview Illinois 60026-1215 (US)
(72) Inventor: MINO, Oswaldo, Houston, TX 77064 (US); McMAHON, Michael, J., Palatine, IL 60067 (US); PIOTROWSKI, Stanley, Addison, IL 60101 (US); MILLER, Doug, Kingwood, TX 77339 (US)
(74) Representative: Finnie, Peter John
(86) International application number: PCT/US2004/028852
(87) International publication number: WO 2005/035372

(56) References cited:
- WO-A-00/71441
- US-A- 5 657 896

## Description

### FIELD OF THE INVENTION

The present invention relates generally to bulk material cargo containers within which fluid-like or flowable bulk cargo materials, such as, for example, dry bulk chemicals, powdered and pelletized resins, flour, coffee beans, grain, and the like, are to be housed or contained while being shipped, transported, or stored, and more particularly to a new and improved bulk material cargo container liner, for use in conjunction with such bulk material cargo containers, wherein the new and improved bulk material cargo container liner is characterized by means of an internal structural system which effectively restricts or prevents the tendency of the rear wall member of the bulk material cargo container liner to experience any rearwardly oriented outward bulging, under the influence of the substantially large hydrostatic head which is normally or inherently impressed upon the rear wall member of the bulk material cargo container liner by means of the bulk cargo material contained within the bulk material cargo container liner, as a result of the bulk cargo material having been charged into or deposited within the bulk material cargo container liner, by imparting restraint forces to the rear wall member of the bulk material cargo container liner, and wherein further, an external structural system is also provided so as to effectively supplement the internal structural system so as to not only ensure the fact that the internal structural system is effectively maintained intact and that the structural integrity of the bulk material cargo container liner is preserved, but in addition, the external structural system also structurally interconnects the bulk material cargo container liner to interior regions of the bulk material cargo container so as to effectively prevent any movement or collapse of the bulk material cargo container liner when the bulk material cargo container is tilted during bulk material cargo unloading operations..

### BACKGROUND OF THE INVENTION

Bulk material cargo containers are conventionally utilized, at different times, to house or contain different fluid-like or flowable bulk cargo materials, such as, for example, dry bulk chemicals, powdered and pelletized resins, coffee beans, flour, grains, rice, sugar, and the like. The bulk material cargo containers are integrally formed within, for example, the cargo holds of ships, trucks, railroad cars, and the like, whereby the bulk cargo materials can readily be shipped or transported from one location to another. Alternatively, the bulk material cargo containers are utilized to temporarily store bulk cargo materials at a particular location prior to the continued transportation or shipping of the bulk cargo materials, or still further, prior to the discharge or unloading of the bulk cargo materials from the bulk material cargo containers.

Since different bulk cargo materials are shipped or transported within a particular bulk material cargo container at different times, it is imperative that the bulk material cargo.containers effectively be clean so as not to contaminate the materials, comprising a particular bulk material cargo load, with any residual materials which may have remained within the bulk material cargo container from a previously shipped or transported bulk material cargo load. Accordingly, in order to eliminate the necessary cleaning of each bulk material cargo container after a particular bulk material cargo load has been unloaded or discharged from a particular one of the bulk material cargo containers, it has become conventional within the industry to employ removable bulk material container liners within the cargo holds or the bulk material cargo containers whereby, after a particular bulk material cargo load is delivered to its destination and discharged or unloaded, the bulk material cargo container liner is simply removed from the bulk material cargo container, thereby again rendering the bulk material cargo container usable for carrying another bulk material cargo load without requiring a significant amount of cleaning of the bulk material cargo container.

Examples of bulk material cargo container liners as used within bulk material cargo containers for shipping or transporting fluid-like or flowable materials are disclosed within United States Patent 5,657,896 which issued on August 19, 1997 to Matias**,** United States Patent 5,542,563 which issued on August 6, 1996 to Matias**,** United States Patent 5,489,037 which issued on February 6, 1996 to Stopper, United States Patent 5,421,476 which issued on June 6, 1995 to Matias**,** United States Patent 5,222,621 which issued on June 29, 1993 to Matias**,** United States Patent 5,193,710 which issued on March 16, 1993 to Podd, Sr. et al.**,** United States Patent 5,152,735 which issued on October 6, 1992 to Podd, Jr. et al.**,** United States Patent 5,137,170 which issued on August 11, 1992 to Matias**,** United States Patent 4,884,722 which issued on December 5, 1989 to Podd**,** United States Patent 4,541,765 which issued on September 17, 1985 to Moore**,** and **FRENCH Patent** 2,461,661 which was published on June 2, 1981 in the name of Bac**.** While the aforenoted removable bulk material cargo container liners have obviously performed satisfactorily from an overall point of view in connection with the achievement of their primary objectives, such removable bulk material cargo container liners have exhibited several operational and structural difficulties. For example, as disclosed within the aforenoted United States Patent 5,489,037 which issued to **Stopper,** United States Patent 5,152,735 which issued to Podd, Jr. et al.**,** United States Patent 4,884,722 which issued to Podd**,** and **FRENCH Patent** 2,461,661 which issued to Bac**,** bracing systems comprising structural bulkheads, reinforcing straps, and rigid cross-beams, are employed.

More particularly, the structural bulkheads are interposed between the rear end wall members of the bulk material cargo container liners and the rear end walls of the bulk material cargo containers, which are conventionally formed by means of a pair of pivotal doors, such that the loads or hydrostatic head forces, characteristic of the bulk material disposed internally within the bulk material cargo container liners, are not transferred to the rear doors of the bulk material cargo containers. In addition, strapping systems and reinforcing cross-beams-are sometimes additionally utilized in conjunction with the structural bulkheads so as to secure and effectively support the structural bulkheads with respect to the bulk material cargo container as well as with respect to the bulk material cargo container liner. It is therefore readily appreciated that these systems are structurally complex and time-consuming to erect or install. In addition, such bulkhead structures add a significant amount of weight to the gross weight of the cargo load to be transported or shipped, and they do not always enable the viewing of the interior of the bulk material cargo container liner and the bulk material cargo container whereby, for example, monitoring of the inflation or expansion of the bulk material cargo container liner, and the charging of the bulk materials into the bulk material cargo container liner, are not always able to be readily achieved.

Continuing further, as disclosed within all of the aforenoted **Matias** patents, relatively complex reinforcing systems, comprising a plurality of reinforcing straps disposed both internally and externally of the bulk material cargo container liners, are utilized. While such reinforcing systems ostensibly serve to in fact reinforce the rear end wall member of the bulk material cargo container liner, such systems pose potentially defective problems, and in addition, such reinforcing systems are costly to fabricate and implement. For example, it is noted that a plurality of vertically spaced, horizontally oriented external reinforcing straps, and a plurality of horizontally spaced, vertically oriented external reinforcing straps are secured to the external surface of the rear end wall member of the bulk material cargo container liner so as to effectively crisscross each other at a plurality of intersection locations and thereby form a checker-board arrangement. Still further, a plurality of obliquely oriented tensioning straps are disposed internally within the bulk material cargo container liner wherein first end portions of the internally disposed tensioning straps are fixedly secured to the plurality of externally disposed reinforcing straps at the intersection locations thereof, while second end portions of the plurality of internally disposed tensioning straps are fixedly secured to predetermined locations upon the floor member of the bulk material cargo container liner. In view of the fact that the internally disposed tensioning straps effectively comprise lineal members, the cross-sectional area of each tensioning strap is extremely small. Accordingly, the resulting interactive clamping force defined or generated between each tensioning strap and the bulk material disposed internally within the bulk material cargo container liner is correspondingly small whereby the securing, holding, or restraint forces, acting upon the rear wall member of the bulk material cargo container liner, are only a function of the floor-anchoring attachment assembly, the strapping tension, and the rear wall-anchoring attachment assembly defined upon the rear wall member of the bulk material cargo container liner at each crisscrossed intersection.

WO00/71441 describes a container liner comprising six faces, one of which corresponds to the container door, wherein at least one fabric strip is stitched only over part of the face corresponding to the door and only over part on the inside of two adjacent faces. At the same time, the intermediate sections of the strip are stitch-free and form reserves leaving free the vertical ridges constituting the joint between the adjacent faces and the face corresponding to the floor.

Notwithstanding the above liners, a need exists in the art for a new and improved bulk material cargo container liner, for use in conjunction with bulk material cargo containers, and within which bulk cargo materials are to be accommodated for ship- ping, transportation, and storage purposes, wherein an internal restraint system will be capable of providing enhanced restraint forces for impression upon or transmission to the rear wall member of the bulk material cargo container liner so as to effectively restrict or prevent the tendency of the rear wall members of the bulk material cargo container liner to experience or undergo any rearwardly oriented outward bulging under the influence of the substantially large hydrostatic head which is normally or inherently impressed upon the rear wall member of the bulk material cargo container liner by means of the bulk cargo material contained within the bulk material cargo container liner as a result of the bulk cargo material having been charged into or de- posited within the bulk material cargo container liner, as well as an external structural system which can effectively supplement the internal structural system so as to maintain the structural integrity thereof, as well as to effectively prevent any movement or collapse of the bulk material cargo container liner when the bulk material cargo container is tilted during bulk material cargo load unloading operations.

### SUMMARY OF THE INVENTION

The foregoing and other objectives are achieved in accordance with the teachings and principles of the present invention as defined by claim 1, through the provision of a new and improved bulk material cargo container liner which, in accordance with any one of the plurality of different embodiments thereof, is generally seen to comprise the utilization of a plurality of gusset members which are disposed internally within the bulk material cargo container liner and-which are laterally spaced with respect to each other across the width of the bulk material cargo container liner. Each one, of the gusset members comprises, for example, a plate member having a substantially triangular or trapezoidal configuration wherein a first side or edge portion of the gusset plate member is integrally attached to the interior surface portion of the rear wall member of the bulk material cargo container liner, while a second side or edge portion of the substantially triangularly or trapezoidally configured gusset plate member is integrally attached to the interior surface portion of the floor member of the bulk material cargo container liner. It is therefore to be appreciated that not only are restraint forces imposed upon or distributed to the rear wall member of the bulk material cargo container along linear loci, as opposed to such forces being conventionally concentrated at point loci, but in addition, retention forces are likewise imposed upon or distributed to the floor member of the bulk material cargo container along linear loci, as opposed to such forces also being conventionally concentrated at point loci.

Still further, not only are significant clamping forces effectively imposed or impressed upon the opposite side surfaces of each gusset plate member by means of the bulk material disposed within the bulk material cargo container liner so as to effectively maintain each gusset plate member at a fixed location within the interior portion of the bulk material cargo container liner, but in addition, the weight and hydrostatic head forces, characteristic of the bulk material contained within the bulk material cargo container liner, serve to respectively reinforce the integral attachments of each gusset plate member to the interior surface portions of the rear wall and floor members of the bulk material cargo container liner. In addition to, or in conjunction with the aforenoted substantially triangularly or trapezoidally configured gusset plate members, auxiliary strapping is also fixedly secured upon external surface regions of the floor and rear wall members of the bulk material cargo container liner so as to not only supplement the internal structural system so as to maintain the structural integrity thereof, but in addition, to effectively prevent any movement or collapse of the bulk material cargo container liner when the bulk material cargo container is tilted during the performance of bulk material cargo load unloading operations.

### BRIEF DESCRIPTION OF THE DRAWINGS

Various other objects, features, and attendant advantages of the present invention will be more fully appreciated from the following detailed description when considered in connection with the accompanying drawings in which like reference characters designate like or corresponding parts throughout the several views, and wherein:

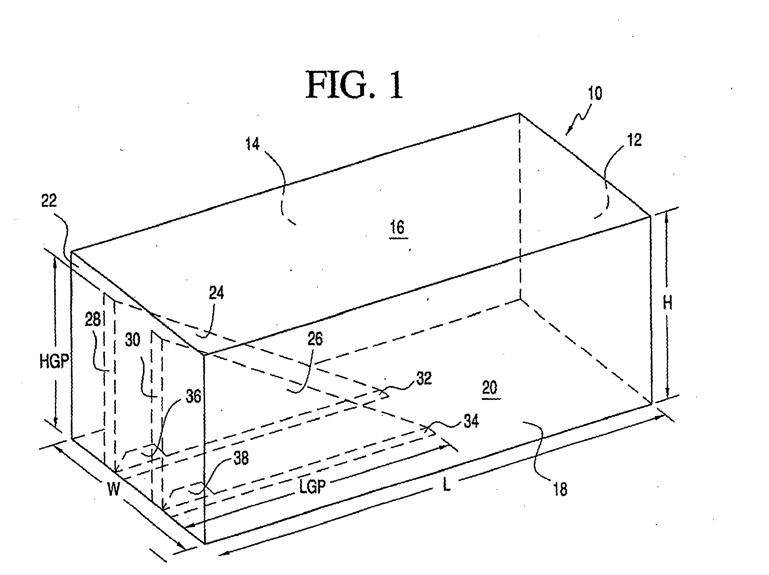

**FIGURE 1** is a perspective view of a first embodiment of a new and improved bulk material cargo container liner, for use within bulk material cargo containers for holding and transporting bulk cargo materials, wherein a first arrangement of gusset plate members, disposed internally within the bulk material cargo container liner and integrally attached to the interior surface portions of the rear wall and floor members of the bulk material cargo container liner, is disclosed;

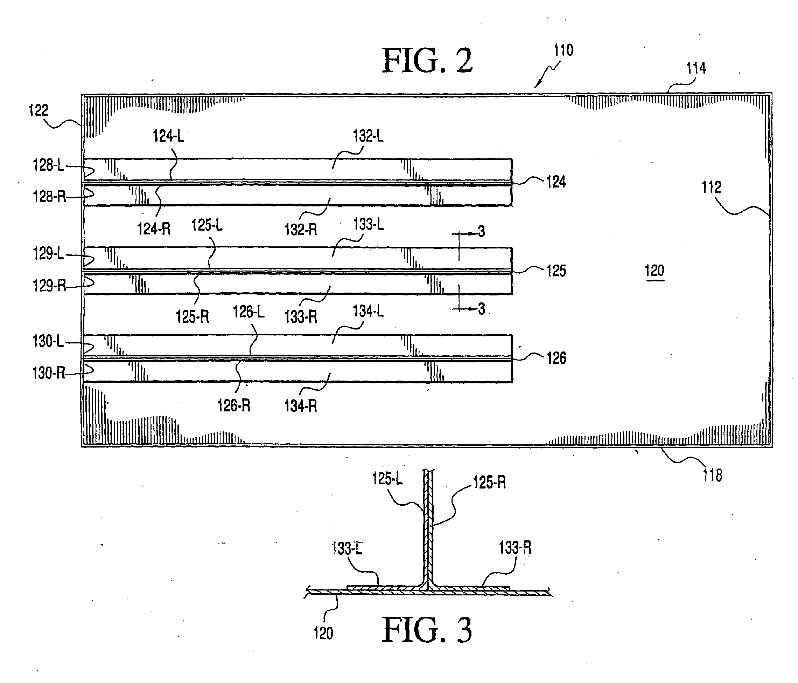

**FIGURE 2** is a top plan view of a second embodiment of a bulk material cargo container liner, for use within bulk material cargo containers for holding and transporting bulk cargo materials, wherein a second preferred arrangement of the gusset plate members, as disposed internally within the bulk material cargo container liner and integrally attached to the interior surface portions of the rear wall and floor members of the bulk material cargo container liner, is disclosed;
**FIGURE 3** is a cross-sectional view of, for example, the central one of the gusset plate members, as incorporated within the gusset plate assembly disclosed within **FIGURE 2** and as taken along the lines 3-3 of **FIGURE 2****,** showing the details, for example, of attaching the bottom edge portion of each gusset plate member to the interior surface portion of the floor member of the bulk material cargo container liner;

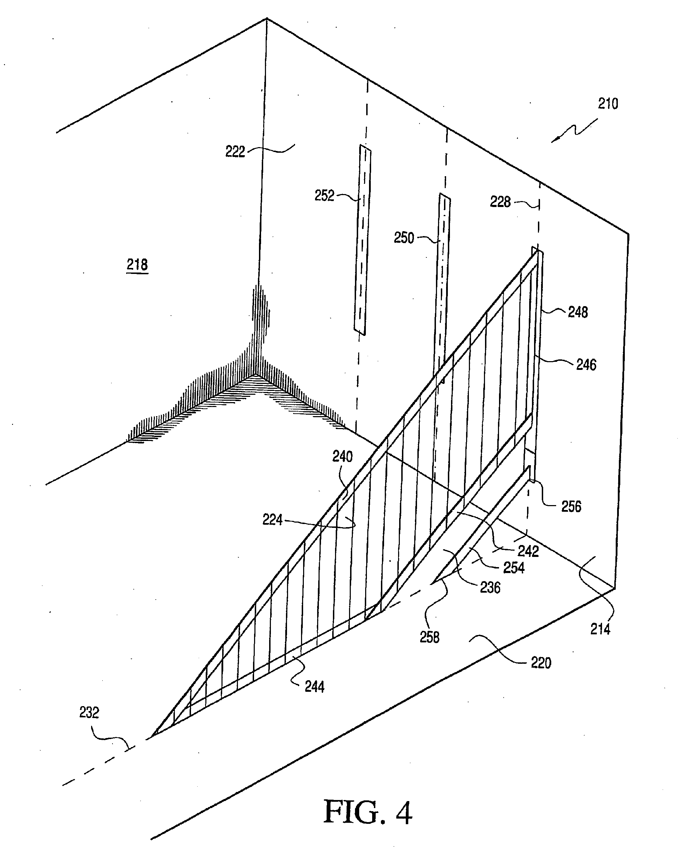

**FIGURE 4** is a partial perspective view of a third embodiment of a bulk material cargo container liner, for use within bulk material cargo containers for holding and transporting bulk cargo materials, wherein the structural details of a preferred gusset plate member, as disposed internally within the bulk material cargo container liner, and as integrally attached to the interior surface portions of the rear wall and floor members of the bulk material cargo container liner, are disclosed;

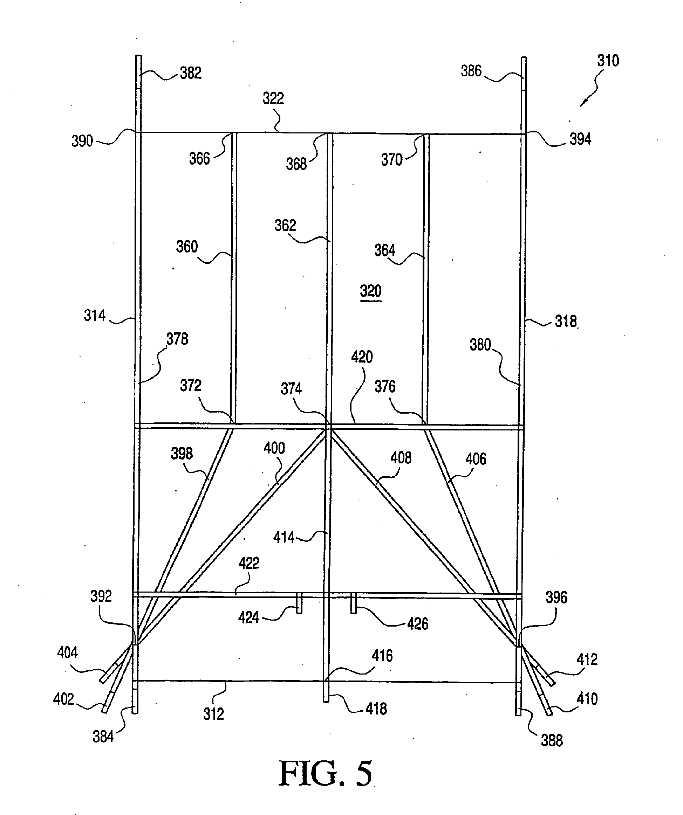

**FIGURE 5** is a bottom plan view of a fourth embodiment of a bulk material cargo container liner having reinforcing strapping members secured to the exterior surface portion of the floor member of the bulk material cargo container liner so as to not only supplement the internal gusset plate structural system in order to maintain the structural integrity thereof, but in addition, to effectively connect the bulk material cargo container liner to interior portions of the bulk material cargo container so as to effectively prevent any movement of the bulk material cargo container liner with respect to the bulk material cargo container, or collapse of the bulk material cargo container liner, when the bulk material cargo container is tilted during bulk material cargo load unloading operations;

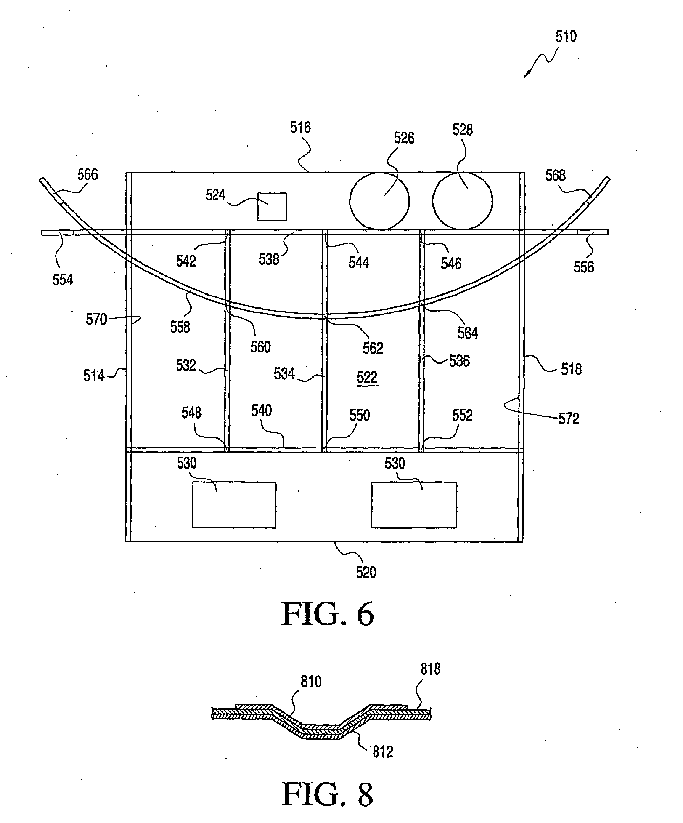

**FIGURE 6** is a rear elevational view of a fifth embodiment of a bulk material cargo container liner having reinforcing strapping members secured to the exterior surface portion of the rear wall member of the bulk material cargo container liner so as to not only supplement the internal gusset plate structural system so as to maintain the structural integrity thereof, but in addition, to effectively connect the bulk material cargo container liner to interior portions of the bulk material cargo container so as to effectively prevent any substantial movement of the bulk material cargo container liner relative to the bulk material cargo container, as well as the collapse of the bulk material cargo container liner, when the bulk material cargo container is tilted during bulk material cargo load unloading operations;

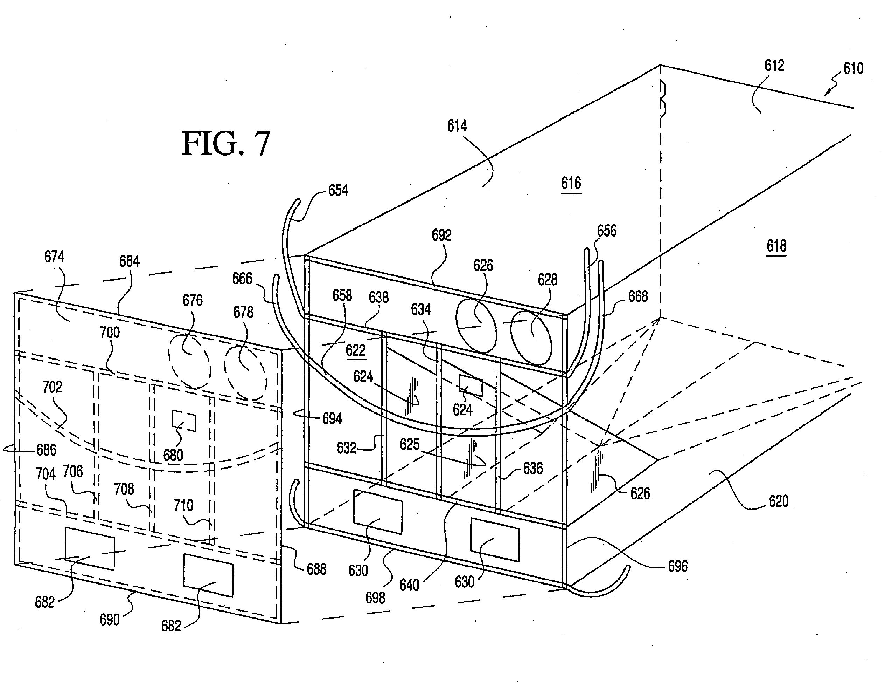

**FIGURE 7** is a rear perspective view of a sixth embodiment of a bulk material cargo container liner having a safety sheet fixedly secured upon the exterior surface portion of the rear wall member of the bulk material cargo container liner so as to not only provide the rear wall member of the bulk material cargo container liner with additional support against outwardly directed bulging forces, but in addition, to effectively provide a sealing structure with respect to the rear wall member of the bulk material cargo container liner in case the structural integrity of the rear wall member of the bulk material cargo container liner is compromised; and
**FIGURE 8** is an enlarged cross-sectional view of a side wall portion of a new and improved bulk material cargo container liner showing the details of a cleat structure which may be integrally incorporated upon internal surface portions of the side wall members of the bulk material cargo container linear so as to structurally cooperate with corresponding structures integrally formed within internal surface portions of the side wall members of the bulk material cargo container for maintaining the bulk material cargo container liner fixed in position with respect to the bulk material cargo container.

### DETAILED DESCRIPTION OF THE ILLUSTRATED EMBODIMENTS

Referring now to the drawings, and more particularly to FIGURE 1 thereof, a first embodiment of a new and improved bulk material cargo container liner, which is construted in accordance with the teachings and principles of the present invention and which is adapted for use within bulk material cargo containers for holding and transporting bulk cargo materials, is illustrated and is generally indicated by the reference character 10. More particularly, the new and improved bulk material cargo container liner 10 of the present invention is preferably fabricated from a suitable material, such as, for example, extruded polyethylene, and as can readily be appreciated from FIGURE 1, the bulk material cargo container liner 10 has a geometrical configuration which substantially comprises that of a rectangular parallelepiped. Accordingly, the bulk material cargo container liner 10 is seen to include, as viewed in FIGURE 1, a front or forward wall member 12, a left side wall member 14, a top or ceiling member 16, a right side wall member 18, a bottom or floor member 20, and a back or rear wall member 22. Still further, it is noted that the bulk material cargo container liner 10 preferably has a width dimension W of 2.337 metres [ninety-two inches (92") or approximately eight feet (8.00')], a length dimension L of 5.893 metres [two hundred thirty-two inches or approximately nineteen and one-third feet (19.33')], and a height dimension H of 2.388 metres [ninety-four inches (94") or approximately eight feet (8.00')]. Still further, it is to be understood that in order to facilitate the loading of bulk cargo materials into the bulk material cargo container liner 10, the bulk material cargo container liner 10 is provided with a suitable loading port or sleeve, which is not shown but which may be similar to those shown within the aforenoted patents to Stopper and Podd, Sr. et al., and in a similar manner, in order to facilitate the unloading of the bulk cargo materials from the bulk material cargo container liner 10, the bulk material cargo container liner 10 is likewise provided with a discharge port or sleeve member, which is also not shown but which may likewise be similar to those shown within the aforenoted patents to Stopper and Podd, Sr. et al.

Continuing still further, and in accordance with the unique and novel structure specifically characteristic of the new and improved first embodiment bulk material cargo container liner 10 constructed in accordance with the principles and teachings of the present invention, and with reference still being made to FIGURE 1, a plurality, for example, a pair, of laterally spaced gusset members 24,26 are adapted to be fixedly attached to the back or rear wall member 22 of the bulk material cargo container liner 10, as well as to be fixedly attached to the bottom or floor member 20 of the bulk material cargo container liner 10. Each one of the gusset members 24,26 comprises a plate member having a substantially right-triangular geometrical configuration, and therefore, the vertically oriented leg or edge portion of each gusset plate member 24,26 is adapted to be fixedly attached to the back or rear wall member 22 of the bulk material cargo container liner 10 along a respective linear seam locus 28,30, while the horizontally oriented leg or edge portion of each gusset plate member 24,26 is adapted to be fixedly attached to the bottom or floor member 20 of the bulk material cargo container liner 10 along a respective linear seam locus 32,34.

It is to be noted that the gusset plate members 24,26 are preferably formed from a suitable material which is substantially the same as, or compatible with, the material from which the bulk material cargo container liner 10 is fabricated, and therefore, the attachment of the gusset plate members 24,26, with respect to the back or rear wall member 22, and with respect to the bottom or floor member 20 of the bulk material cargo container liner 10, may be achieved in accordance with any one of a plurality of modes. For example, the gusset plate members 24,26 can be heat-sealed respectively along the aforenoted linear seam loci 28,30 and 32,34 to the back or rear wall member 22, and to the bottom or floor member 20, or alternatively, the gusset plate members 24,26 can be secured to the back or rear wall member 22, and to the bottom or floor member 20, by means of suitable stitching. In either case, the aforenoted linear seam loci 28,30, and 32,34 are effectively defined by means of folded flap members, formed from the gusset plates 24,26, which are fixedly attached to the back or rear wall member 22, and to the bottom or floor member 20, of the bulk material cargo container liner 10, as will be disclosed in more detail hereinafter. It is also to be noted that while only two laterally spaced gusset plates 24,26 are illustrated in accordance with the principles and teachings of the first embodiment of the bulk material cargo container liner 10 of the present invention, bulk material cargo container liners, constructed in accordance with the principles and teachings of the present invention can comprise more than two gusset plate members as will also become more apparent hereinafter.

As can be appreciated still further from **FIGURE 1****,** each one of the gusset plate members 24,26 has a length dimension or longitudinal extent LGP which may be, for example, up to approximately fifty percent (50%) of the length dimension L of the bulk material cargo container liner 10, and a height dimension HGP which may be, for example, up to approximately ninety-five percent (95%) of the height dimension H of the bulk material cargo container liner 10. While the particular dimensions of each gusset plate member 24,26 may vary, it can be readily appreciated that the surface area of each trianguarly configured gusset plate member 24,26 is substantially large, and that the configurations of the gusset plate members 24,26, the surface areas defined by means of the gusset plate members 24,26, and the attachment of the gusset plate members 24,26 to the back or rear wall member 22, as well as to the bottom or floor member 20, of the bulk material cargo container liner 10, comprise the significant features of the present invention. More particularly, it can be readily be appreciated that, as a result of the interior volume of the bulk material cargo container liner 10 being filled with the particular bulk cargo material, the bulk cargo material present within the bulk material cargo container liner 10 will naturally or inherently exhibit or generate significantly large hydrostatic head forces which will act in all directions so as to in fact be exerted or impressed upon, for example, the front or forward wall member 12, the left side wall member 14, the right side wall member 18, the bottom or floor member 20, and the back or rear wall member 22 of the bulk material cargo container liner 10.

In view of the additional fact, however, that the front or forward wall member 12, the left side wall member 14, the right side wall member 18, and the bottom or floor member 20 of the bulk material cargo container liner 10 are respectively rigidly supported by means of corresponding wall members of the bulk material cargo container within which the bulk material cargo container liner 10 is disposed, such hydrostatic head forces, generated by means of the bulk cargo material, and impressed or exerted upon the front or forward wall member 12, the left side wall member 14, the right side wall member 18, and the bottom or floor member 20 of the bulk material cargo container liner 10, will effectively be suitably or appropriately resisted or counterbalanced. In this manner, those portions of the bulk material cargo container liner 10, as defined by means of the front or forward wall member 12, the left side wall member 14, the right side wall member 18, and the bottom or floor member 20 of the bulk material cargo container liner 10, will be statically disposed within the bulk material cargo container as a result of the front or forward wall member 12, the left side wall member 14, the right side wall member 18, and the bottom or floor member 20 of the bulk material cargo container liner 10 positionally conforming to, or being positionally confined by, the fixed dispositions of the corresponding wall members of the bulk material cargo container within which the bulk material cargo container liner 10 is disposed.

To the contrary, in view of the fact that the back or rear wall of the bulk material cargo container is open, that is, the back or rear wall of the bulk material cargo container does not in effect comprise a fixed, rigid wall member, but to the contrary, comprises a pair of doors that are movable with respect to each other between **OPENED** and **CLOSED** positions, such hydrostatic head forces, normally operating upon the back or rear wall member 22 of the bulk material cargo container liner 10, will normally cause the back or rear wall member 22 of the bulk material cargo container liner 10 to experience rearwardly oriented bulging. However, as a result of the disposition of the gusset plate members 24,26 within the interior portion of the bulk material cargo container liner 10, and in view of the particularly noted fixation of the gusset plate members 24,26 to the back or rear wall member 22, as well as to the bottom or floor member 20, of the bulk material cargo container liner 10, such rearwardly oriented bulging of the back or rear wall member 22 of the bulk material cargo container liner 10 does not occur. More particularly, as a result of the disposition of the gusset plate members 24,26 within the interior portion of the bulk material cargo container liner 10, and as a result of the filling of the interior volume of the bulk material cargo container liner 10 with the bulk cargo material, the bulk cargo material, interposed between the pair of gusset plate members 24,26, as well as the bulk cargo material interposed between the left side wall member 14 and the gusset plate member 24, and the bulk cargo material interposed between the right side wall member 18 and the gusset plate member 26, acts upon the opposite side surfaces of the gusset plate members 24,26 so as to effectively clampingly engage the gusset plate members 24,26 and thereby effectively fixedly secure the gusset plate members 24,26 at their illustrated positions within the interior portion of the bulk material cargo container liner 10.

It can be further appreciated that in conjunction with the aforenoted clamping engagement forces impressed upon the opposite side surfaces of each one of the gusset plate members 24,26 by means of the bulk cargo material interposed between the pair of gusset plate members 24,26, as well as the bulk cargo material interposed between the left side wall member 14 and the gusset plate member 24, and the bulk cargo material interposed between the right side wall member 18 and the gusset plate member 26, the weight forces of the bulk cargo material disposed within the bulk material cargo container liner 10, as well as the hydrostatic head forces, directed toward and acting upon the bottom or floor member 20 of the bulk material cargo container liner 10, and in particular, the weight and hydrostatic head forces directed toward and acting upon the linear seam loci 32,34 along which the horizontally oriented leg or edge portion of each gusset plate member 24,26 is fixedly attached to the bottom or floor member 20 of the bulk material cargo container liner 10, serve to fixedly maintain the bottom or floor member 20 of the bulk material cargo container liner 10, and the linear seam loci 32,34 thereof, at fixed positions within and with respect to the bottom or floor region of the bulk material cargo container. Accordingly, in view of the fact that the bottom or floor member 20 of the bulk material cargo container liner 10, and the linear seam loci 32,34 thereof, are maintained at fixed positions within and with respect to the bottom or floor region of the bulk material cargo container, and in view of the fact that the back or rear wall member 22 of the bulk material cargo container liner 10 is effectively fixed in position with respect to the bottom or floor member 20 of the bulk material cargo container liner 10 through means of the gusset plate members 24,26, as attached to the back or rear wall member 22 of the bulk material cargo container liner 10 along the vertically oriented linear seam loci 28,30, it can be readily appreciated that the gusset plate members 24,26 effectively exert restraining forces upon the back or rear wall member 22 of the bulk material cargo container liner 10 such that the back or rear wall member 22 of the bulk material cargo container liner 10 cannot in fact experience, exhibit, or undergo rearwardly oriented bulging.

It is therefore to be further appreciated that as a result of the structural incorporation of the gusset plate members 24,26 within the bulk material cargo container liner 10, and the consequent internal restraining forces generated by the gusset plate members 24,26 and accordingly impressed upon the back or rear wall member 22 of the bulk material cargo container liner 10, the need for structural bulkheads, and external securing or reinforcing strapping, characteristic of conventional **PRIOR ART** bulk material cargo container liners, is obviated. Still further, in view of the utilization of the gusset plate members 24,26, and the fixation of the same to the back or rear wall member 22 of the bulk material cargo container liner 10, and to the bottom or floor member 20 of the bulk material cargo container liner 10, along the respective linear seam loci 28,30 and 32,34, relatively large clamping forces able to be impressed upon the opposite side surfaces of each one of the gusset plate members 24,26 by means of the bulk cargo material disposed within the bulk material cargo container liner 10. In addition, and most importantly in conjunction with the generation or development of such clamping forces, restraint forces are impressed upon the back or rear wall member 22 of the bulk material cargo container liner 10, by means of the gusset plate members 24,26, along linear loci as defined by means of the linear seamed portions 28,30.

Such restraint forces, acting along the noted linear loci, are therefore better able to prevent any rearwardly oriented bulging of the back or rear wall member 22 of the bulk material cargo container liner 10 than simple conventional tie-down strapping, disposed internally within the bulk material cargo container liner as disclosed, for example, within the aforenoted **PRIOR ART** patents which issued to **Matias,** in view of the fact that such strapping only exerts forces at point locations as opposed to along linear loci. It is lastly noted in connection with the bulk material cargo container liner 10, as disclosed within **FIGURE 1****,** that, in order to facilitate the discharge or unloading of the bulk cargo material from the bulk material cargo container liner 10, each one of the gusset plate members 24,26 is provided with a cross-flow through-passage 36,38 such that all internal regions within the bulk material cargo container liner 10 can be fluidically connected to the discharge port, not shown, defined within the back or rear wall member 22 of the bulk material cargo container liner 10.

With reference now being made to **FIGURE 2****,** a second embodiment of a new and improved bulk material cargo container liner, constructed in accordance with additional teachings and principles of the present invention, and which is likewise adapted for use within bulk material cargo containers for holding and transporting bulk cargo materials, is illustrated and is generally indicated by the reference character 110. It is to be noted that the bulk material cargo container liner 110, as disclosed within **FIGURE 2****,** is substantially the same as the bulk material cargo container liner 10 as disclosed within **FIGURE 1****,** except as will be noted shortly hereinafter, and therefore, a detailed description of the bulk material cargo container liner 110 will be omitted herefrom for brevity purposes, the description of the bulk material cargo container liner 110 being confined to those structural features incorporated within the bulk material cargo container liner 110 which are different from, or are in addition to, those structural features characteristic of the bulk material cargo container liner 10. It is accordingly noted, still further, that the various structural features characteristic of the bulk material cargo container liner 110 will be designated by means of reference characters similar to those utilized in connection with the bulk material cargo container liner 10 except that the reference characters for the bulk material cargo container liner 110 will be within the 100 series. More particularly, it is seen that the bulk material cargo container liner 110 has the configuration of a rectangular parallelepiped comprising a front or forward wall member 112, a left side wall member 114, a top or ceiling member, not shown, a right side wall member 118, a bottom or floor member 120, and a back or rear wall member 122.

However, in accordance with the structural'features characteristic of the bulk material cargo container liner 110, as opposed to the structural makeup comprising the bulk material cargo container liner 10, three; laterally spaced gusset plate members 124,125,126 are provided within the bulk material cargo container liner 110, and it is further noted, as can be additionally appreciated from **FIGURE 3****,** that each one of the gusset plate members 124,125,126 actually comprises a composite gusset plate member comprising a pair of gusset plate members 124-L,124-R,125-L,125-R,126-L, 126-R which are adapted to be fixedly bonded or otherwise attached to each other in a side-by-side fashion. The lower edge portions of the composite gusset plate members 124,125, 126 are respectively provided with oppositely disposed flap members 132-L,132-R,133-L,133-R,134-L,134-R whereby undersurface portions of the plurality of flap members 132-L, 132-R,133-L,133-R,134-L,134-R are adapted to be fixedly attached or otherwise bonded to the interior surface of the bottom or floor member 120 of the bulk material cargo container liner 110 so as to form the aforenoted horizontally oriented linearly seamed loci. In a similar manner, the vertically oriented edge portions of the composite gusset plate members 124,125,126 are respectively provided with oppositely disposed flap members 128-L,128-R,129-L,129-R,130-L,130-R whereby rearward-facing surface portions of the plurality of flap members 128-L,128-R,129-L,129-R,130-L,130-R are adapted to be fixedly attached or otherwise bonded to the interior surface portion of the rear wall member 122 of the bulk material cargo container liner 110 so as to form the aforenoted vertically oriented linearly seamed loci.

With reference now being made to **FIGURE 4****,** a partial perspective view of a third embodiment bulk material cargo container liner, for use within bulk material cargo containers for holding and transporting bulk cargo materials, is disclosed and is generally indicated by the reference character 210. It is to be noted that the bulk material cargo container liner 210, as disclosed within **FIGURE 4****,** is similar to the bulk material cargo container liners 10,110 respectively disclosed within **FIGURES 1** **and** **2****,** except as will be noted shortly hereinafter, and therefore, a detailed description of the bulk material cargo container liner 210 will be omitted herefrom for brevity purposes, the description of the bulk material cargo container liner 210 being confined to those structural features incorporated within the bulk material cargo container liner 210 which are different from, or are in addition to, those structural features characteristic of the bulk material cargo container liners 10,110. It is accordingly noted, still further, that the various structural features characteristic of the bulk material cargo container liner 210 will be designated by means of reference characters similar to those utilized in connection with the bulk material cargo container liners 10, 110, except that the reference characters for the bulk material cargo container liner 210 will be within the 200 series. More particularly, it is seen that three, laterally spaced gusset plate members are adapted to be respectively fixedly secured to the floor and rear wall members 220,222 of the bulk material cargo container liner 210 along the aforenoted horizontally and vertically oriented linear loci, although only one of the three gusset plate members 224 is illustrated.

It is seen that all of the gusset plate members, as exemplified by means of gusset plate member 224, has a substantially trapezoidal geometrical configuration comprising a pair of longer and shorter, upper and lower, parallel edges 240,242, and a pair of oppositely disposed non-parallel angled edges 244,246 which are respectively adapted to be fixedly secured to the floor and rear wall members 220, 222 of the bulk material cargo container liner 210. A plurality of reinforcing straps 248,250,252 are fixedly secured upon the interior surface portion of the rear wall member 222 of the bulk material cargo container line 210, and similar reinforcing straps, not illustrated, are fixedly secured upon the exterior surface portion of the rear wall member 222 of the bulk material cargo container liner 210. Still further, similar reinforcing straps, also not illustrated, may be secured upon the interior and exterior surface portions of the floor member 220 of the bulk material cargo container liner 210, and in this manner, those portions of the rear wall member 222 and the floor member 220 which are interposed between such internally and externally located reinforcing straps effectively form reinforced laminates, with such internally and externally located reinforcing straps, to which the edge portions of each gusset plate member, as exemplified by means of the edge portions 244,246 of the gusset plate member 224, may be fixedly secured.

It is further noted that in view of the fact that each one of the gusset plate members, as exemplified by means of gusset plate member 224, has the aforenoted trapezoidal geometrical configuration, then the bottom edge portion of each gusset plate member, as exemplified by means of bottom edge portion 242 of gusset plate member 224, effectively cooperates with the corner region of the bulk material cargo container liner 210, which is defined by means of the junction of rear wall member 222 and floor member 220, so as to form a cross-flow, through-passageway 236 through which the bulk cargo material can flow toward the discharge port, not shown. It is lastly seen that in addition to the provision of the plurality of gusset plate members, as exemplified by means of gusset plate member 224, a plurality of auxiliary reinforcing belt or straps, as exemplified by means of reinforcing belt or strap 254, are also provided within the bulk material cargo container liner 210. It is seen that each reinforcing strap or belt, as exemplified by means of reinforcing strap or belt 254, is disposed parallel to the bottom edge portion of each gusset plate member, as exemplified by means of bottom edge portion 242 of gusset plate member 224, so as to also be disposed in a coplanar manner with respect to its associated gusset plate member, and it is further appreciated that opposite ends of the reinforcing belt or strap 254 are respectively fixedly secured to the rear wall member 222 and the floor member 220 as at point locations 256,258 which are located along the vertical and horizontal loci 228,232. The provision of the plurality of auxiliary reinforcing straps or belts, as exemplified by means of reinforcing strap or belt 254, further restrains, and thereby effectively prevents, any rearwardly oriented outward bulging of the rear wall member 222 of the bulk material cargo container liner 210.

As has been alluded to hereinbefore in connection with the disclosure of the bulk material cargo container liner 210 as illustrated within **FIGURE 4****,** the bottom edge portion of each gusset plate member, as exemplified by means of bottom edge portion 244 of the gusset plate member 224, can be affixed to the floor member 220 of the bulk material cargo container liner 210 by means of a laminated structure comprising internal and external reinforcing straps similar to, for example, the reinforcing straps 248,250,252 affixed upon the interior surface portion of the rear wall member 222 of the bulk material cargo container liner 210. Accordingly, as illustrated within **FIGURE 5****,** the arrangement of such reinforcing straps, as fixed upon the exterior surface portion of the floor member of a fourth embodiment of a new and improved bulk material cargo container liner generally indicated by the reference character 310, is disclosed. More particularly, the bulk material cargo container liner 310 is seen to comprise a front wall member 312, a left side wall member 314, a right side wall member 318, a floor member 320, and a rear wall member 322. A plurality of reinforcing straps 360,362,364 are fixedly secured upon the exterior surface portion of the floor member 320 of the bulk material cargo container liner 310, and it is seen that the reinforcing straps 360,362,364 are laterally spaced from each other so as to effectively coincide in a coplanar manner with the gusset plate members, not illustrated within **FIGURE 5****,** which will be disposed internally within the bulk material cargo container liner 310 in a manner similar to that characteristic of the gusset plate members disposed within the bulk material cargo container liners 110,210 of **FIGURES 2** and **4****.**

In addition, the reinforcing straps 360,362,364 will also be effectively mated with additional reinforcing straps, also not illustrated, which will be fixedly secured upon the interior surface portion of the floor member 320 of the bulk material cargo container liner 310, so as to form with such interiorly located reinforcing straps and those portions of the floor member 320 of the bulk material cargo container liner 310 which will be interposed between the reinforcing straps fixedly secured to both the interior and exterior surface portions of the floor member 320 of the bulk material cargo container liner 310, laminated reinforcement regions disposed along the linear horizontally oriented seamed loci which will correspond to the seamed loci formed within the bulk material cargo container liners 110,210 as illustrated within **FIGURES 2** and **4****.** It is to be further appreciated that the exterior reinforcing straps 360,362,364, as well as the corresponding interior reinforcing straps, not illustrated, extend from end portions 366, 368,370, located at the rear end portion of the floor member 320 of the bulk material cargo container liner 310 which intersects the base of the rear wall member 322 of the bulk material cargo container liner 310, to terminal end portions 372,374,376 which correspond to the locations at which the distal end portions of the gusset plate members terminate.

Still yet further, it is also to be appreciated that not only is it desired that the exterior reinforcing straps 360,362,364, as well as the interior reinforcing straps, not shown, secured to the floor member 320 of the bulk material cargo container liner 310, and that the interior reinforcing straps 248,250,252 illustrated within **FIGURE 4****,** as well as the corresponding exterior reinforcing straps, not shown in **FIGURE 4****,** serve as a means for effectively securing the gusset plate members, exemplified by means of the gusset plate member.224 as illustrated within **FIGURE 4****,** to both the floor and rear wall members 220,222, and 320,322 of, for example, the bulk material cargo container liners 210,310, whereby the gusset plate members can effectively prevent the rearwardly oriented, outward bulging of the rear wall members 222,322 of the bulk material cargo container liners 210,310 due to the charging or loading of the bulk material cargo container liners 210,310 with bulk cargo material, but it is additionally desired that the exterior reinforcing straps 360,362,364, as well as the interior reinforcing straps, not shown, secured to the floor member 320 of the bulk material cargo container liner 310 serve as a means for ensuring that the bulk material cargo container liners 210,310 remain substantially fixed or stationary within their bulk material cargo containers during, for example, the tilting of the bulk material cargo containers during bulk cargo material unloading or discharging operations.

Accordingly, with reference still being made to **FIGURE 5****,** it is seen that a plurality of additional reinforcing straps are fixedly secured to both the exterior and interior surface portions of the floor member 320 of the bulk material cargo container liner 310 so as to achieve this objective. More particularly, a pair of reinforcing straps 378,380 are fixedly secured upon the exterior surface portion of the floor member 320 of the bulk material cargo container liner 310 so as to extend along the outside edge portions of the bulk material cargo container liner 310 as respectively defined between the junctions of the floor member 320 and the side wall members' 314,318 of the bulk material cargo container liner 310 throughout substantially the entire longitudinal extent or length of the floor member 320 as defined between the front wall and rear wall members 312, 322 of the bulk material cargo container liner 310. The reinforcing straps 378,380 will also prefer-ably be mated with additional reinforcing straps, not illustrated, which will be fixedly secured upon the interior, laterally spaced side edge surface portions of the floor member 320 of the bulk material cargo container liner 310 located at the junctions of the floor member 320 and the side wall members 314,318 of the bulk material cargo container liner 310, so as to form with such interiorly located reinforcing straps and those portions of the floor member 320 of the bulk material cargo container liner 310 which will be interposed between the reinforcing straps fixedly secured to both the interior and exterior surface portions of the floor member 320 of the bulk material cargo container liner 310, laminated reinforcement regions. It is noted that the only significant difference between the exterior reinforcing straps 378,380, and the interior reinforcing straps, not illustrated, is that the opposite terminal ends of the exterior reinforcing straps 378,380 are respectively provided with extension loop and fastening structures 382,384, and 386,388 which are therefore located within the vicinities of the four corner regions of the bulk material cargo container liner 310, as at 390,392,394,396, for a purpose to be explained in more detail shortly hereinafter.

Continuing further, a pair of reinforcing straps 398,400 are fixedly secured upon the exterior surface portion of the floor member 320 of the bulk material cargo container liner 310 so as to respectively extend between the terminal end portions 372,374 of the reinforcing-straps 360, 362 and the corner region 392 of the bulk material cargo container liner 310, and as was the case with the additional reinforcing straps 378,380, the reinforcing straps 398,400 will also preferably be mated with additional reinforcing straps, not illustrated, which will be fixedly secured upon the interior surface portion of the floor member 320 of the bulk material cargo container liner 310, so as to form, with such interiorly located reinforcing straps and those portions of the floor member 320 of the bulk material cargo container liner 310 which will be interposed between the reinforcing straps fixedly secured to both the interior and exterior surface portions of the floor member 320 of the bulk material cargo container liner 310, laminated reinforcement regions. Again, as was the case with the reinforcing straps 378,380, it is noted that the only significant difference between the exterior reinforcing straps 398,400, and the interior reinforcing straps, not illustrated, is that the terminal ends of the exterior reinforcing straps 398,400, disposed within the corner region 392 of the bulk material cargo container liner 310, are respectively provided with extension loop and fastening structures 402,404 which are similar to the extension loop and fastening structure 384.

In a similar manner, a pair of reinforcing straps 406,408 are fixedly secured upon the exterior surface portion of the floor member 320 of the bulk material cargo container liner 310 so as to respectively extend between the terminal end portions 374,376 of the reinforcing straps 362, 364 and the corner region 396 of the bulk material cargo container liner 310, and as was the case with the additional reinforcing straps 398,400, the reinforcing straps 406,408 will also preferably be mated with additional reinforcing straps, not illustrated, which will be fixedly secured upon the interior surface portion of the floor member 320 of the bulk material cargo container liner 310, so as to form, with such interiorly located reinforcing straps and those portions of the floor member 320 of the bulk material cargo container liner 310 which will be interposed between the reinforcing straps fixedly secured to both the interior and exterior surface portions of the floor member 320 of the bulk material cargo container liner 310, laminated reinforcement regions. Again, as was the case with the reinforcing straps 398,400, it is noted that the only significant difference between the exterior reinforcing straps 406,408, and the interior reinforcing straps, not illustrated, is that the terminal ends of the exterior reinforcing straps 406,408, disposed within the corner region 396 of the bulk material cargo container liner 310, are respectively provided with extension loop and fastening structures 410, 412 which are similar to the extension loop and fastening structure 388.

Still yet further, a last additional reinforcing strap 414 is fixedly secured upon the exterior surface portion of the floor member 320 of the bulk material cargo container liner 310 so as to extend along the longitudinal axis or centerline of the floor member 320 of the bulk material cargo container liner 310 whereby the reinforcing strap 414 extends between the terminal end portion 374 of the reinforcing strap 362 and a terminal end portion 416 located at the junction with the front wall member 312 of the bulk material cargo container liner 310. As was the case with the additional reinforcing straps 398,400,406,408, the reinforcing strap 414 will also preferably be mated with an additional reinforcing strap, not illustrated, which will be fixedly secured upon the interior surface portion of the floor member 320 of the bulk material cargo container liner 310, so as to form, with such interiorly located reinforcing strap and those portions of the floor member 320 of the bulk material cargo container liner 310 which will be interposed between the reinforcing straps fixedly secured to both the interior and exterior surface portions of the floor member 320 of the bulk material cargo container liner 310, laminated reinforcement regions. In addition, as was also the case with the reinforcing straps 378,380,398,400,406,408, it is noted that the only significant difference between the exterior reinforcing strap 414 and the interior reinforcing straps, not illustrated, is that the terminal end of the exterior reinforcing strap 414 is provided.with an extension loop and fastening structure 418 which is similar to the extension loop and fastening structures 382,384,386,388,402, 404,410,412.

As can be appreciated still further, when the extension loop and fastening structures 382,384,386,388,402, 404,410,412,418 are fixedly secured to suitable corresponding or mating fastener structures fixedly mounted upon the interior wall members of the bulk material cargo container, the bulk material cargo container liner 310 will be fixedly secured within the bulk material cargo container so as to prevent any substantial movement of the bulk material cargo container liner 310 with respect to the bulk material cargo container, particularly when the bulk material cargo container is movably tilted during bulk cargo material unloading or discharging operations. Considered alternatively, the use of the various extension loop and fastening structures 382,384,386,388,402,404,410,412,418 effectively prevents the longitudinal or axial collapse or implosion of the bulk material cargo container liner 310 during the aforenoted tilting of the bulk material cargo container during bulk cargo material unloading or discharging operation. In addition, it can be further appreciated that by fixedly attaching the forward end portion of the bulk material cargo container liner 310 to the forward region of the bulk material cargo container, by means of the various extension loop and fastening structures 382,384,386,388,402,404,410,412,418, additional restraint forces can effectively be impressed upon the rear wall member 322 of the bulk material cargo container liner 310 so as to effectively prevent the rearwardly oriented outward bulging thereof as a result of such restraint forces being transmitted to the rear wall member 322 of the bulk material cargo container liner 310, and along the vertically oriented seamed loci, by means of the reinforcing straps 398,400,406,408,414, and their interior surface counterparts, not illustrated, as well as by means of the reinforcing assemblies comprising the reinforcing straps 360,362,364, and their interior surface counterparts, not illustrated, which are connected to the gusset plate members, not illustrated.

It is lastly seen from **FIGURE 5** that the bulk material cargo container liner 310 further comprises a pair of transversely oriented, longitudinally spaced reinforcing straps 420,422 which are fixedly secured to the exterior surface portion of the floor member 320 of the bulk material cargo container liner 310 so as to extend across the entire width dimension of the bulk material cargo container liner 310 as defined between the side wall members 314,318. The reinforcing straps 420,422 may be similar to the reinforcing straps 360,362,364,378,380,398,400,406,408, and may therefore have counterpart reinforcing straps, not illustrated, fixedly attached to the interior surface portions of the floor member 320 of the bulk material cargo container liner 310 so as to form the aforenoted laminated structures or assemblies. The reinforcing strap 420, and its counterpart, not illustrated, are provided so as to effectively integrally interconnect the terminal end portions 372,374,376 of the reinforcing straps 360,362,364 together, while the reinforcing strap 422 effectively serves as a mechanism upon which a pair of loops or tubular sleeve members 424,426 may be fixedly mounted. A transversely oriented securing bar, rod, or strap, not shown, may be inserted through the loops or sleeve members 424,426 so as to additionally facilitate or ensure the retention of the bulk material cargo container liner 310 at a fixed position within the bulk material cargo container when the bulk material cargo container is tilted in order to facilitate the discharge of the bulk cargo material from the bulk material cargo container liner 310.

Referring now to **FIGURE 6****,** a fifth embodiment of a bulk material cargo container liner, generally indicated by the reference character 510, is illustrated wherein additional reinforcing straps are fixedly secured to exterior surface portions of the rear wall member 522 of the bulk material cargo container liner 510 so as to not only supplement or reinforce the internal gusset plate members, but in addition, to effectively connect the bulk material cargo container liner 510 to interior portions of the bulk material cargo container so as to effectively prevent any substantial movement of the bulk material cargo container liner 510 within or relative to the bulk material cargo container, as well as to effectively prevent the vertical collapse of the bulk material cargo container liner 510, when the bulk material cargo container is tilted during bulk material cargo load unloading operations. More particularly, it is seen that the bulk material cargo container liner 510 comprises a left side wall member 514, a ceiling member 516, a right side wall member 518, a floor member 520, and the rear wall member 522. A viewing window 524, a bulk cargo material loading port 526, and a ventilation port 528 are defined within upper regions of the rear wall member 522, and a pair of discharge ports 530,530 are defined within lower regions of the rear wall member 522. A plurality of laterally spaced, vertically oriented reinforcing straps 532,534,536 are fixedly secured upon the exterior surface portions of the rear wall member 522 of the bulk material cargo container liner 510, and it is to be appreciated that the reinforcing straps 532,534,536 can cooperate with corresponding reinforcing straps, which are not illustrated within **FIGURE 6** but which can be disposed upon the interior surface portions of the rear wall member 522 of the bulk material cargo container liner 510 in a manner similar to that illustrated in connection with the reinforcing straps 248,250,252 as illustrated within **FIGURE 4****,** so as to form with such interiorly located reinforcing straps a laminated structure which effectively sandwiches portions of the rear wall member 522 of the bulk material cargo container liner 510 therebetween.

In addition to the provision of the vertically oriented reinforcing straps 532,534,536, a pair of vertically spaced horizontally oriented reinforcing straps 538,540 are also fixedly attached to the exterior surface portion of the rear wall member 522 of the bulk material cargo container liner 510 so as to extend across the entire lateral extent of the rear wall member 522 of the bulk material cargo container liner 510 between the side wall members 514,518. The upper reinforcing strap 538 integrally interconnects the upper terminal end portions of the vertically oriented reinforcing straps 532,534,536 as at junctions 542,544,546, and the lower reinforcing strap 540 integrally interconnects the lower terminal end portions of the vertically oriented reinforcing straps 532,534,536 as at junctions 548,550,552. In addition to the integral interconnections defined between the upper reinforcing strap 538 and the vertically oriented reinforcing straps 532,534,536 as at junctions 542,544,546, it is also seen that opposite ends of the upper reinforcing strap 538 are respectively provided with extension loop and fastening structures 554,556 which may be similar to any one of the extension loop and fastening structures 382,384,386, 388,402,404,410,412,418 as illustrated within **FIGURE 5****.** As was the case with the extension loop and fastening structures 382,384,386, 388,402,404,410,412,418, the extension loop and fastening structures 554,556 can be connected to support structures, not shown, fixedly mounted upon interior portions of the bulk material cargo container, and in this manner, the upper end region of the bulk material cargo container liner 510, and more particularly, the upper end region of the rear wall member 522 of the bulk material cargo container liner 510, can be fixedly supported within the bulk material cargo container so as to prevent any vertical collapse or sagging of the rear end portion of the bulk material cargo container liner 510, particularly when the bulk material cargo container is tilted, such as, for example, during bulk cargo material unloading operations.

Continuing further, a third reinforcing strap 558 is likewise fixedly secured upon the exterior surface portion of the rear wall member 522 of the bulk material cargo container liner 510 so as to extend across the entire lateral extent of the rear wall member 522 of the bulk material cargo container liner 510 and thereby integrally interconnect the three vertically oriented reinforcing straps 532, 534,536 as at junctions 560,562,564, however, it is further appreciated that the reinforcing strap 558 has a uniquely arcuate configuration. The reinforcing strap 558 is provided with such an arcuate configuration so as to truly support the rear wall member 522 of the bulk material cargo container liner 510 and thereby effectively counteract the normal or natural tendency or manner in which the rear wall member 522 of the bulk material cargo container liner 510 would otherwise sag or collapse under gravitational forces, whereby such sagging or collapse of the rear wall member 522 of the bulk material cargo container liner 510 can effectively be prevented. As was the case with the reinforcing strap 538, the opposite ends of the reinforcing strap 558 are provided with extension loop and fastening structures 566,568 for connection to fixed support structures disposed upon the interior wall portions of the bulk material cargo container.

Still yet further, it is also noted that additional vertically oriented reinforcing straps 570,572 can be fixedly secured to the exterior surface portion of the rear wall member 522 of the bulk material cargo container liner 510 so as to extend along the rear corner regions of the bulk material cargo container liner 510 as defined between the rear wall member 522 of the bulk material cargo container liner 510 and the side wall members 514,518 of the bulk material cargo container liner 510. The reinforcing straps 570,572 extend throughout the entire vertical height of the bulk material cargo container liner 510, however, it is noted that the terminal end portions of the reinforcing straps 570,572 are not necessarily provided with any extension loop and fastening structures in view of the presence of the extension loop and fastening structures 554,566 and 556,568, within the upper rear corner regions of the bulk material cargo container liner 510, as well as the presence of the extension loop and fastening structures 382,386, as disclosed within **FIGURE 5****,** within the lower rear corner regions of the bulk material cargo container liner.

With reference now being briefly made to **FIGURE 7****,** a sixth embodiment of a bulk material cargo container liner is disclosed and is generally indicated by the reference character 610. It is noted that the structural components disclosed in connection with this embodiment of the bulk material cargo container liner, that correspond to the structural components disclosed in connection with the embodiment of the bulk material cargo container liner 510 as disclosed within **FIGURE 5****,** will be designated by corresponding reference characters except that they will be within the 600 series, and that the discussion of the bulk material cargo container liner 610 will be confined to those structural components which differ from those of the bulk material cargo container liner 510. More particularly, it is seen that in accordance with the bulk material cargo container liner 610, there is provided a safety sheet 674 which is adapted to be fixedly secured upon the exterior surface portion of the rear wall member 622 of the bulk material cargo container liner 610 so as to not only provide the rear wall member 622 of the bulk material cargo container liner 610 with additional support against the aforenoted outwardly directed bulging forces, but in addition, to effectively provide a sealing structure with respect to the rear wall member 622 of the bulk material cargo container liner 610 in case the structural integrity of the rear wall member 622 of the bulk material cargo container liner 610 is compromised. More particularly, the safety sheet 674 may be fabricated from a suitable material similar to that from which the bulk material cargo container liner 610 is fabricated, or alternatively, a woven fabric. The safety sheet 674 is provided with upper apertures 676, 678,680 which positionally correspond with the locations of the loading port 626, the ventilation port 628, and the viewing window 624 defined within the rear wall member 622 of the bulk material cargo container linear 610, as well as a pair of lower apertures 682,682 which positionally correspond to the locations of the discharge ports 630,630 defined within the rear wall member 622 of the bulk material cargo container liner. In addition, the peripheral edge portions 684,686,688,690 of the safety sheet 674 are stitched or otherwise sealed to the corresponding peripheral edge portions 692,694,696,698 of the rear wall member 622 of the bulk material cargo container liner 610, and still further, portions of the safety sheet 674, internally located within the peripheral edge portions 684,686, 688,690 thereof, are also stitched or otherwise sealed, as at 700,702,704 around the horizontally disposed reinforcing straps 638,658,640 fixedly mounted upon the exterior surface portion of the rear wall member 622 of the bulk material cargo container liner 610, as well as at 706,708,710 around the vertically oriented reinforcing straps 632,634,636 fixedly mounted upon the exterior surface portion of the rear wall member 622 of the bulk material cargo container liner 610. In this manner, should the structural integrity of the rear wall member 622 of the bulk material cargo container liner 610 become compromised, the bulk cargo material contained within the bulk material cargo container liner 610 will still be maintained within the bulk material cargo container liner 610 so that the bulk material cargo container liner 610 does not experience or exhibit any substantial leakage.

With reference lastly being made to **FIGURE 8****,** it is seen that a last additional unique and novel structural feature characteristic of any one of the bulk material cargo container liners resides in the provision of a plurality of rigid cleat members 810 which may be fabricated from a suitable plastic material and which may be arranged in vertically aligned sets fixedly mounted upon the interior surface portions of both the left and right side wall members of the bulk material cargo container liner, one of the cleat members 810 being illustrated as being mounted upon a portion of a right side wall member 818 of a bulk material cargo container liner. Each one of the cleat members 810 has a substantially outwardly oriented convex cross-sectional configuration and is specifically designed to structurally cooperate with a correspondingly configured concave recessed region 812 integrally formed within a side wall portion of the bulk material cargo container. Accordingly, after the bulk material cargo container liner has been properly disposed and positionally located within the bulk material cargo container, and as a result of the bulk cargo material being charged into the interior portion of the bulk material cargo container liner, the bulk material cargo container liner will undergo outward expansion as a result of the hydrostatic head load forces acting or impressed upon, for example, the right side wall member 618, as well as upon the left, front, or rear wall members of the bulk material cargo container liner. As a result of such outward expansion of the wall members of the bulk material cargo container liner, the cleat member 810 will structurally engage the rigid recessed region 812 defined within the right side wall of the bulk material cargo container. These intercooperating cleat and recessed structures 810,812 will therefore serve to effectively retain the bulk material cargo container liner at a fixed position with respect to the bulk material cargo container, particularly during the tilting of the bulk material cargo container in order to facilitate the unloading or discharge of the bulk cargo material from the interior portion of the bulk material cargo container liner.

Obviously, many variations and modifications of the present invention are possible in light of the above teachings. It is therefore to be understood that within the scope of the appended claims, the present invention may be practiced otherwise than as specifically described herein.

## Claims

1. A bulk material cargo container liner (10) for use within a bulk material cargo container having rear door structures,
the bulk material cargo container liner (10) having a substantially rectangular parallelepiped structure when erected for disposition within a bulk material cargo container and therefore comprising a front wall member (12), a pair of side wall members (14,18), a ceiling member (16), a floor member (20), and a rear wall member (22); and comprising:
a plurality of gusset plates (24,26) disposed internally within said bulk material cargo container liner (10) so as to be disposed parallel to each other for impressing restraint forces along first linear loci (28,30) upon said rear wall member (22) of said bulk material cargo container liner (10), and thereby effectively reduce the forces normally imposed upon said rear wall member (22) of said bulk material cargo container liner, by means of hydrostatic head load forces generated as a result of bulk cargo material being charged into said bulk material cargo container liner, which would normally tend to cause said rear wall member (22) of said bulk material cargo container liner to bulge outwardly, so as to thereby prevent said rear wall member (22) of said bulk material cargo container liner (10) from undergoing outward bulging,
**characterised in that** each one of said plurality of gusset plates (24,26), disposed parallel to each other has a substantially triangular or trapezoidal configuration wherein a first side or edge portion of each one of said substantially triangularly or trapezoidal, respectively, configured gusset plates (24,26) is fixedly secured to said rear wall member (22) of said bulk material cargo container liner (10) along said first linear loci (28,30), while a second side or edge portion of each one of said substantially triangularly or trapezoidal, respectively, configured gusset plates (24,26) is fixedly secured to said floor member (20) of said bulk material cargo container liner (10) along second linear loci (32,34).

2. The bulk material cargo container liner as set forth in Claim 1, wherein:
said rear wall member of said bulk material cargo container liner has predetermined vertical height and lateral width dimensions; and
said first linear loci, along which said restraint forces are impressed, extend substantially vertically along said rear wall member of said bulk material cargo container liner throughout substantially the entire vertical height dimension of said rear wall member of said bulk material cargo container liner.

3. The bulk material cargo container liner as set forth in Claim 1, further comprising:
cleat means fixedly mounted upon said side wall members of said bulk material cargo container liner for operatively engaging corresponding configured recessed regions of the bulk material cargo container so as to effectively retain said bulk material cargo container liner at a fixed position within the bulk material cargo container even when the bulk material cargo container is tilted so as to unload the bulk cargo material from said bulk material cargo container liner.

4. The bulk material cargo container liner as set forth in Claim 1, further comprising:
a plurality of reinforcing straps interconnecting said plurality of parallel gusset plates to said rear wall member of said bulk material cargo container liner.

5. The bulk material cargo container liner as set forth in Claim 1, further comprising:
a plurality of reinforcing straps interconnecting said plurality of parallel gusset plates to said floor member of said bulk material cargo container liner.

6. The bulk material cargo container liner as set forth in Claim 1, further comprising:
a plurality of reinforcing straps fixedly mounted upon said floor member of said bulk material cargo container liner and interconnecting said plurality of gusset plates to forward corner regions of said bulk material cargo container liner; and
fastening means for connecting said forward corner regions of said bulk material cargo container liner to interior supports located upon the bulk material cargo container such that restraint forces are transmitted to said plurality of reinforcing straps and said gusset plates.

7. The bulk material cargo container liner as set forth in Claim 1, further comprising:
reinforcing strap means fixedly mounted upon upper exterior surface portions of said rear wall member of said bulk material cargo container liner; and,
fastening means for connecting said reinforcing strap means to interior supports located upon the bulk material cargo container so as to prevent said rear wall member of said bulk material cargo container liner from vertically sagging and collapsing.

8. The bulk material cargo container liner as set forth in Claim 1, further comprising:
safety sheet means secured to said rear wall member of said bulk material cargo container liner for reinforcing said rear wall member against bulging and leakage.

## Patentansprüche

1. Schüttgutfrachtbehälterauskleidung (10) zur Verwendung mit einem Schüttgutfrachtbehälter, der Hintertürstrukturen aufweist,
wobei die Schüttgutfrachtbehälterauskleidung (10) eine im Wesentlichen rechtwinklige parallelepipedische Struktur aufweist, wenn sie zur Anordnung in einem Schüttgutfrachtbehälter aufgerichtet ist, und deshalb ein vorderes Wandglied (12), ein Paar Seitenwandglieder (14, 18), ein Deckenglied (16), ein Bodenglied (20) und ein Rückwandglied (22) aufweist; und mit:
mehreren Knotenblechen (24, 26), die so innerhalb der Schüttgutfrachtbehälterauskleidung (10) angeordnet sind, dass sie sich parallel zueinander erstrecken, um entlang ersten linearen Stellen (28, 30) auf dem Rückwandglied (22) der Schüttgutfrachtbehälterauskleidung (10) Rückhaltekräfte auszuüben und dadurch die durch hydrostatische Kopflastkräfte, die infolgedessen erzeugt werden, dass Schüttgutfracht in die Schüttgutfrachtbehälterauskleidung geladen wird, und
die normalerweise dazu neigen würden, ein Nachaußenwölben des Rückwandglieds (22) der Schüttgutfrachtbehälterauskleidung zu verursachen, normalerweise auf das Rückwandglied (22) der Schüttgutfrachtbehälterauskleidung ausgeübten Kräfte effektiv zu reduzieren, um dadurch zu verhindern, dass das Rückwandglied (22) der Schüttgutfrachtbehälterauskleidung (10) eine Nachaußenwölbung erfährt,
**dadurch gekennzeichnet, dass** jedes der mehreren parallel zueinander angeordneten Knotenbleche (24, 26) eine im Wesentlichen dreieckige oder trapezförmige Konfiguration aufweist, wobei eine erste Seite oder ein erster Randteil jedes der im Wesentlichen dreieckig bzw. trapezförmig konfigurierten Knotenbleche (24, 26) entlang den ersten linearen Stellen (28, 30) fest an dem Rückwandglied (22) der Schüttgutfrachtbehälterauskleidung (10) angebracht ist, während eine zweite Seite oder ein zweiter Randteil jedes der im Wesentlichen dreieckig bzw. trapezförmig konfigurierten Knotenbleche (24, 26) entlang zweiten linearen Stellen (32, 34) fest an dem Bodenglied (20) der Schüttgutfrachtbehälterauskleidung (10) angebracht ist.

2. Schüttgutfrachtbehälterauskleidung nach Anspruch 1, wobei:
das Rückwandglied der Schüttgutfrachtbehälterauskleidung vorbestimmte vertikale Höhe- und laterale Breitenabmessungen aufweist; und
die ersten linearen Stellen, entlang denen die Rückhaltekräfte ausgeübt werden, über im Wesentlichen die gesamte vertikale Höhenabmessung des Rückwandglieds der Schüttgutfrachtbehälterauskleidung im Wesentlichen vertikal entlang dem Rückwandglied der Schüttgutfrachtbehälterauskleidung verlaufen.

3. Schüttgutfrachtbehälterauskleidung nach Anspruch 1, weiterhin mit:
Leistenmitteln, die fest an den Seitenwandgliedern der Schüttgutfrachtbehälterauskleidung angebracht sind, um entsprechende konfigurierte ausgenommen Bereiche des Schüttgutfrachtbehälters in Wirkeingriff zu nehmen und so die Schüttgutfrachtbehälterauskleidung in einer festgelegten Position im Schüttgutfrachtbehälter effektiv festzuhalten, selbst wenn der Schüttgutfrachtbehälter gekippt wird, um die Schüttgutfracht aus der Schüttgutfrachtbehälterauskleidung zu entladen.

4. Schüttgutfrachtbehälterauskleidung nach Anspruch 1, weiterhin mit:
mehreren Verstärkungsbändern, die die mehreren parallelen Knotenbleche mit dem Rückwandglied der Schüttgutfrachtbehälterauskleidung verbinden.

5. Schüttgutfrachtbehälterauskleidung nach Anspruch 1, weiterhin mit:
mehreren Verstärkungsbändern, die die mehreren parallelen Knotenbleche mit dem Bodenglied der Schüttgutfrachtbehälterauskleidung verbinden.

6. Schüttgutfrachtbehälterauskleidung nach Anspruch 1, weiterhin mit:
mehreren Verstärkungsbändern, die fest an dem Bodenglied der Schüttgutfrachtbehälterauskleidung angebracht sind und die mehreren Knotenbleche mit vorderen Eckbereichen der Schüttgutfrachtbehälterauskleidung verbinden, und
Befestigungsmitteln zum Verbinden der vorderen Eckbereiche der Schüttgutfrachtbehälterauskleidung mit inneren Stützen, die am Schüttgutfrachtbehälter angebracht sind, so dass Rückhaltekräfte auf die mehreren Verstärkungsbänder und die Knotenbleche übertragen werden.

7. Schüttgutfrachtbehälterauskleidung nach Anspruch 1, weiterhin mit:
Verstärkungsbandmitteln, die fest an oberen Außenflächenteilen des Rückwandglieds der Schüttgutfrachtbehälterauskleidung angebracht sind; und
Befestigungsmitteln zum Verbinden der Verstärkungsbandmittel mit inneren Stützen, die an dem Schüttgutfrachtbehälter angeordnet sind, um zu verhindern, dass das Rückwandglied der Schüttgutfrachtbehälterauskleidung vertikal durchsackt und zusammenfällt.

8. Schüttgutfrachtbehälterauskleidung nach Anspruch 1, weiterhin mit:
Sicherheitsflächengebilden, die an dem Rückwandglied der Schüttgutfrachtbehälterauskleidung befestigt sind, um das Rückwandglied gegen Auswölben und Leckage zu verstärken.

## Revendications

1. Poche interne de conteneur (10) pour matériau en vrac, destinée à l'utilisation dans un conteneur de matériau en vrac, ayant des structures de porte arrière,
la poche interne de conteneur (10) pour matériau en vrac ayant une structure parallélépipédique substantiellement rectangulaire une fois montée, de manière à être disposée dans un conteneur de matériau en vrac et comprenant par conséquent un organe de paroi avant (12), une paire d'organes de parois latérales (14, 18), un organe de plafond (16), un organe de plancher (20), et un organe de paroi arrière (22) ; et comprenant :
une pluralité de plaques à soufflet (24, 26) disposées à l'intérieur de ladite poche interne de conteneur (10) pour matériau en vrac, de manière à être disposées parallèlement les unes aux autres pour appliquer des forces de contrainte le long de premiers emplacements linéaires (28, 30) sur ledit organe de paroi arrière (22) de ladite poche interne de conteneur (10) pour matériau en vrac, et pour ainsi réduire effectivement les forces normalement exercées sur ledit organe de paroi arrière (22) de ladite poche interne de conteneur pour matériau en vrac, sous forme de forces de charges hydrostatiques générées en raison du remplissage de ladite poche interne de conteneur pour matériau en vrac avec du matériau en vrac, qui auraient normalement tendance à bomber vers l'extérieur ledit organe de paroi arrière (22) de ladite poche interne de conteneur pour matériau en vrac, de manière à ainsi empêcher que ledit organe de paroi arrière (22) de ladite poche interne de conteneur (10) pour matériau en vrac ne subisse un bombement vers l'extérieur,
**caractérisée en ce que** chacune de ladite pluralité de plaques à soufflet (24, 26) disposées parallèlement les unes aux autres a une configuration essentiellement triangulaire ou trapézoïdale, un premier côté ou une première portion de bord de chacune desdites plaques à soufflet (24, 26) de configuration essentiellement triangulaire ou trapézoïdale, respectivement, étant fixé(e) solidement audit organe de paroi arrière (22) de ladite poche interne de conteneur (10) pour matériau en vrac le long desdits premiers emplacements linéaires (28, 30), tandis qu'un deuxième côté ou une deuxième portion de bord de chacune desdites plaques à soufflet (24, 26) de configuration essentiellement triangulaire ou trapézoïdale, respectivement, est fixé(e) solidement audit organe de plancher (20) de ladite poche interne de conteneur (10) pour matériau en vrac le long de deuxièmes emplacements linéaires (32, 34).

2. Poche interne de conteneur pour matériau en vrac selon la revendication 1, dans laquelle
ledit organe de paroi arrière de ladite poche interne de conteneur pour matériau en vrac a des dimensions prédéterminées de hauteur verticale et de largeur latérale ; et
lesdits premiers emplacements linéaires, le long desquels lesdites forces de contrainte sont appliquées, s'étendent substantiellement verticalement le long dudit organe de paroi arrière de ladite poche interne de conteneur pour matériau en vrac sur substantiellement toute la dimension en hauteur verticale dudit organe de paroi arrière de ladite poche interne de conteneur pour matériau en vrac.

3. Poche interne de conteneur pour matériau en vrac selon la revendication 1, comprenant en outre :
des moyens de taquets montés fixement sur lesdits organes de parois latérales de ladite poche interne de conteneur pour matériau en vrac pour engager fonctionnellement des régions en retrait de configuration correspondante du conteneur de matériau en vrac, de manière à retenir efficacement ladite poche interne de conteneur pour matériau en vrac dans une position fixée dans le conteneur de matériau en vrac même lorsque le conteneur de matériau en vrac est incliné de manière à décharger le matériau en vrac de ladite poche interne de conteneur pour matériau en vrac.

4. Poche interne de conteneur pour matériau en vrac selon la revendication 1, comprenant en outre :
une pluralité de sangles de renfort reliant ensemble ladite pluralité de plaques à soufflet parallèles et ledit organe de paroi arrière de ladite poche interne de conteneur pour matériau en vrac.

5. Poche interne de conteneur pour matériau en vrac selon la revendication 1, comprenant en outre :
une pluralité de sangles de renfort reliant ensemble ladite pluralité de plaques à soufflet parallèles et ledit organe de plancher de ladite poche interne de conteneur pour matériau en vrac.

6. Poche interne de conteneur pour matériau en vrac selon la revendication 1, comprenant en outre :
une pluralité de sangles de renfort montées fixement sur ledit organe de plancher de ladite poche interne de conteneur pour matériau en vrac et reliant ensemble ladite pluralité de plaques à soufflet et des régions de coin avant de ladite poche interne de conteneur pour matériau en vrac ; et
des moyens d'attache pour connecter lesdites régions de coin avant de ladite poche interne de conteneur pour matériau en vrac à des supports intérieurs situés sur le conteneur de matériau en vrac de telle sorte que des forces de contrainte soient transmises à ladite pluralité de sangles de renfort et auxdites plaques à soufflet.

7. Poche interne de conteneur pour matériau en vrac selon la revendication 1, comprenant en outre :
des moyens de sangles de renfort montés fixement sur des portions de surface extérieure supérieure dudit organe de paroi arrière de ladite poche interne de conteneur pour matériau en vrac ; et
des moyens d'attache pour connecter lesdits moyens de sangle de renfort à des supports intérieurs situés sur le conteneur de matériau en vrac de manière à empêcher ledit organe de paroi arrière de ladite poche interne de conteneur pour matériau en vrac de s'affaisser verticalement et de s'effondrer.

8. Poche interne de conteneur pour matériau en vrac selon la revendication 1, comprenant en outre
des moyens de feuille de sécurité fixés audit organe de paroi arrière de ladite poche interne de conteneur pour matériau en vrac pour renforcer ledit organe de paroi arrière contre tout bombement et toute fuite.
